Europäisches Patentamt

European Patent Office

Office européen des brevets

(11) Publication number: **0 373 920**
**A1**

# EUROPEAN PATENT APPLICATION

(21) Application number: **89313048.4**

(22) Date of filing: **13.12.89**

(51) Int. Cl.5: **F16L 37/08**

(30) Priority: **16.12.88 NZ 227363**

(43) Date of publication of application:
**20.06.90 Bulletin 90/25**

(84) Designated Contracting States:
**DE FR GB**

(71) Applicant: **PARKER ENZED (N.Z.) LIMITED**
**6 Bowden Road**
**Mt. Wellington, Auckland(NZ)**

(72) Inventor: **Hayman, Lawrence Frederick**
**39 Evelyn Road**
**Howick, Auckland(NZ)**

(74) Representative: **Purvis, William Michael**
**Cameron et al**
**D. Young & Co. 10 Staple Inn**
**London WC1V 7RD(GB)**

(54) Quick connect/disconnect fluid coupling.

(57) A quick connect/disconnect coupling for hydraulic or pneumatic conduits has a male half (4) and a female half (2) with respective fluid bores (5,3) therethrough. Split ring segments (7) are arranged in a ring within the female coupling half (2) and are movable therein. The ring segments are biased towards the centreline (50) of the coupling by an elastic O-ring (9). When the coupling halves are engaged, the ring segments are positioned between a radially extending shoulder (6) on the male coupling half and a radially extending shoulder (21) on the female coupling half. In the engaged and locked position of the coupling halves, the ring segments (7) in blocking relation with the shoulders (6,12) hold the coupling halves together. The ring segments are in abutting relation with adjacent ring segments on either side when the coupling halves are in the engaged in locked position. The male coupling half includes a tubular releasing member (10) slidable mounted thereon. When the releasing member (10) is moved in the direction of the female coupling half a ramped face (18) of the releasing member moves the ring segments radially outwardly above the shoulder (6) on the male coupling half and enables the coupling halves to be disconnected.

FIG. 1

## QUICK CONNECT/DISCONNECT FLUID COUPLING

The invention relates to couplings for making hydraulic and pneumatic connections and particularly to quick connect/disconnect couplings for pneumatic and hydraulic fluid lines.

Many types of pneumatic and hydraulic fluid couplings have been devised over the years. The purpose of these couplings is to connect and disconnect fluid lines of various kinds and to conduct fluids of various pressures. Examples of previously proposed fluid couplings are found in Patent Specifications USA 4, 723, 797; 4, 702, 278; 4, 583,711; 4,543,994; 4,240,466, 4,222,411; 3,831,984; 3,826,523; 3,788,348; 3,758,137; 3,666,300; 3,646,964; 3,592,231; 3,561,472; 3,530,887; 3,498,641; 3,490,491; 3,431,942; 3,163,178; 2,706,646; 2,322,877; 2,318,965; 2,304,390; Re27,635.

Although all of the above couplings were improvements over the then existing prior art, there are particular features that are desired for couplings in virtually all applications. One such feature is ease of engagement. In many couplings tools are required to effect connection and disengagement. In other couplings, tools are not required, but it is necessary to manipulate awkward mechanisms before the coupling halves will engage. In other couplings it is necessary to apply excessive pressure to force the couplings together before the coupling halves will engage. Likewise, when it is necessary to disengage the coupling, excessive pressure or awkward manipulations may be required.

Other couplings have the disadvantage that the coupling halves must be aligned in a particular orientation before they will engage. This prevents the coupling halves from swivelling with respect to each other which is often desirable in making fluid connections. Other coupling designs have parts that quickly wear out due to repeated coupling and uncoupling as well as the effects of high loading conditions due to the pressure of the fluid carried by the coupling.

It is almost universally desirable that a coupling once connected, be locked together in a reliable fashion and be highly resistant to the leakage of fluid.

According to the invention there is provided a quick connect/disconnect coupling for making a connection in a hydraulic and or pneumatic line and comprising a male coupling half and a female coupling half which are engageable and disengageable and are locked together when in engaged relation, wherein:
the male coupling half has a first fluid bore therethrough and includes a first locking surface extending outwardly relative to a centreline of the coupling;
the female coupling half has a second fluid bore therethrough and has a second locking surface extending inwardly relative to the centreline of the coupling, the first and second bores being in fluid communication when the coupling halves are in engagement;
a plurality of locking bodies are mounted for movement transverse to the centreline of the coupling in one of the coupling halves, in the engaged position of the halves the locking bodies engage the first and second locking surfaces and each of the locking bodies is in abutting relation with at least one other of the locking bodies; and
movement means are provided for moving the locking bodies to disengage them from at least one of the locking surfaces whereby the coupling halves are enabled to be disconnected.

Such a fluid coupling for joining hydraulic or pneumatic fluid lines can be readily connected and disconnected without awkward manipulations or the use of tools, can be connected in any orientation and swivelling, can be positively locked when engaged, can be resistant to wear and can be inexpensive to produce.

The coupling can be resistant to high separating loads caused by fluid pressure and can be suitable for use in high pressure, pulsing and vibratory environments.

When the coupling halves are in the engaged relation, ring segments forming the locking bodies are positioned between a shoulder on the male coupling half and shoulder on the female coupling half. Positioning the ring segments in blocking relation between the shoulders locks and coupling halves together. The ring segments are sized to be in abutting relation with adjacent ring segments on each side when the coupling halves are engaged and locked. This adds strength to the coupling.

The male coupling half can have mounted thereon the moement means in the form of a moveable tubular releasing member. The releasing member includes a tapered surface. When the releasing member is moved in the direction of the engaged female coupling member, it contacts the ring segments. The tapered surface of the releasing member moves the ring segments radially outward so that they are no longer in abutting relation with the shoulder on the male coupling half. Once the ring segments are moved to clear the shoulder, the coupling halves may be pulled apart.

The coupling halves are joined together by inserting the male coupling half into the female coupling half. A tapered surface on a leading edge of the male coupling half engages the ring segments and moves them radially outward as the male coupling half is inserted. Once the extending shoulder passes the ring segments, the ring segments drop behind the shoulder to lock the coupling halves in engagement.

The invention is diagrammatically illustrated by way of example in the accompanying drawings, in which:

Figure 1 is a partial cross sectional view of a quick connect/disconnect coupling for making a connection in a hydraulic fluid or pneumatic line according to the invention in the engaged and locked position;

Figure 2 is an end view of split ring segments of the coupling of Figure 1;

Figure 3 is a partial cross sectional view of the coupling of Figure 1 in the releasing position so the coupling halves may be disengaged.

Figure 4 is a partial, cross sectional view of an alternative embodiment of a quick connect/disconnect coupling for making a connection in a hydraulic fluid or pneumatic line according to the invention; and

Figure 5 is an end view of split ring segments of the coupling of Figure 4.

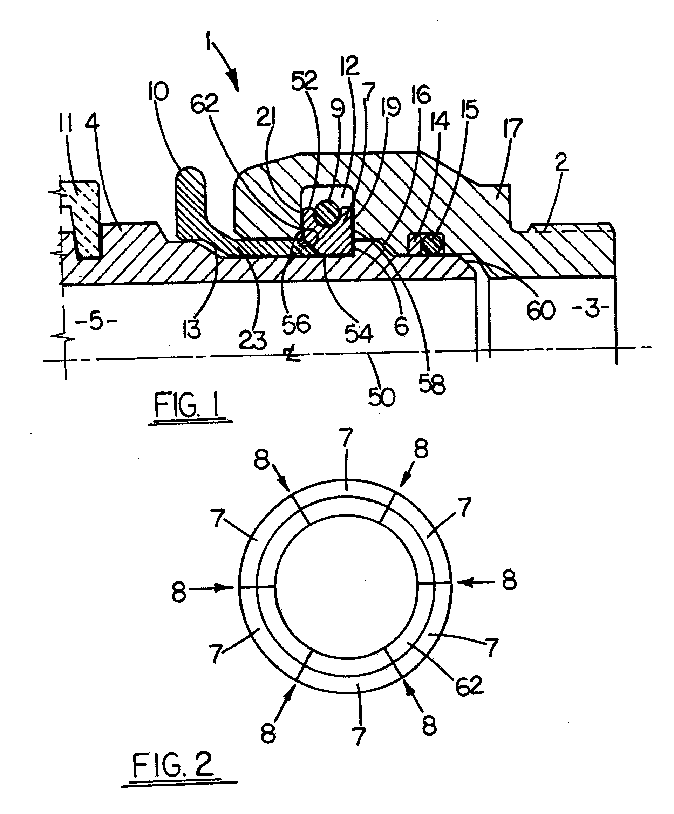

Referring to the drawings and firstly to Figure 1, a coupling 1 for hydraulic or pneumatic conduits includes a female coupling half 2 having a fluid bore 3 therethrough and a male coupling half 4 having a fluid bore 5 therethrough. The male coupling half 4 is engageable within the female coupling half 2 with the fluid bores 3 and 5 arranged along a common centre line 50.

A first radially extending annular shoulder 6, which serves as a first locking surface, extends about the periphery of the male coupling half 4. A second shoulder 21, which serves as a second locking surface, extends radially within the female coupling half 2.

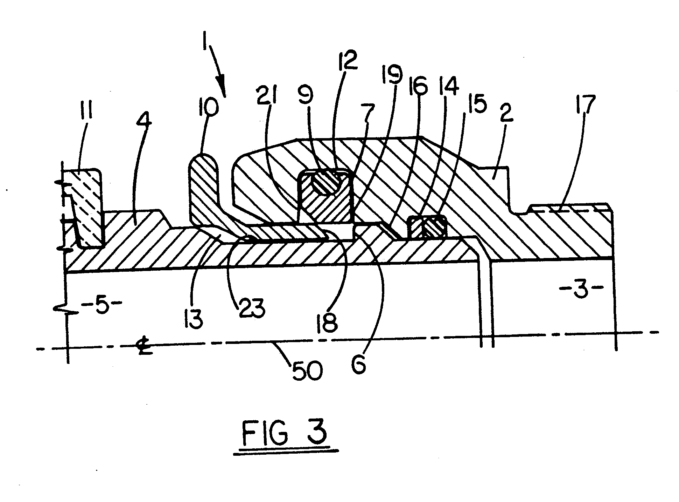

A plurality of locking bodies 7 are mounted within the female coupling half 2. The construction and arrangement of the locking bodies is such that they form a substantially closed ring dimensioned and configured to fit between the locking surfaces 6 and 21 when the coupling halves 2 and 4 are locked and engaged. The locking bodies 7 are moveable between a release position shown in Figure 3, in which the annular shoulder 6 may be moved past locking bodies 7 so that the coupling halves 2 and 4 may be disengaged and an engaged and locked position shown in Figure 1, in which the locking bodies are positioned in blocking relating between the shoulders 6 and 21 to prevent relative axial movement of the female and male coupling halves and to maintain the coupling in engagement.

The locking bodies 7 in the first embodiment are segments of a split collet ring shown in Figure 2. The ring comprises segments which are split at positions around its circumference as indicated by arrows 8 so as to form ring segments. In other embodiments of the invention, the locking bodies may comprise balls, rollers or bodies having other shapes.

As shown in Figures 1 and 2, the ring segments which comprise the locking bodies 7 are substantially rectangular in cross section but are converted to a five sided polygonal shape by inclusion of an angled ring surface 62.

The ring segments are so arranged that first opposite sides 52, 54 of the ring segments at any given position on the ring are in cross section substantially parallel to the centreline 50 extending through the centre of the coupling. Second opposite sides 56, 58 of the ring segments are in cross section substantially perpendicular to the centre line 50.

The locking bodies 7 are retained in a common annular radially sided channel 12 in the female coupling half 2. The locking bodies are substantially free to slide within the channel 12. Ideally, each locking body is brought into contact with or at least close proximity to, the adjacent locking bodies on each side in the split ring when the coupling is in the engaged and locked position. The substantial abutment of each locking body with at least one other locking body serves to prevent deformation of the locking bodies and to maintain the couplings in their engaged position. The surface area provided by the ring segments is also helpful in distributing large forces that may be applied to the coupling by fluid pressure.

An elastic O-ring 9 is provided about the outer periphery of the locking bodies 7. The O-ring 9 serves as biasing means to bias the bodies 7 radially inward against the male coupling half 4. Preferably the O-ring 9 is retained in a groove (not separately referenced) in the first side 52 of the locking bodies.

The coupling 1 also includes a tubular releasing member 10 which includes a ramped face 18 which is adjacent to the locking bodies 7 when the coupling halves are in engagement. The releasing member 10 serves as a movement means for the locking bodies and is operable to move the bodies radially outwardly against the force of the elastic O-ring 9. In other embodiments, a radiused outer edge may be used in place of the ramped face 18. It has been found that a radiused edge also works satisfactorily and is easier to manufacture.

The releasing member 10 includes a flanged portion 23 which, is passed over the end of the male coupling half 4 during assembly and is swaged into a recess 13. As a result, the releasing member 10 is captive on the male half 4 but is slidable in the axial direction.

The female coupling half 2 includes a ring seal 15 and an anti-extrusion ring 14 positioned between the male 4 and female 2 coupling halves when they are in engagement. These items serve to seal the coupling halves in fluid tight relation. The ring seal 15 and the anti-extrusion ring 14 are located adjacent to a threaded end 17 of the female coupling half when the coupling halves are assembled. The male half also has a tapered edge 60 to facilitate insertion of the coupling halves. The male coupling half 4 also includes a ferrule 11 to facilitate attachment to a fluid conduit.

To connect the couplings, the male coupling half 4 is inserted into the female coupling half 2 to place the fluid bores 3 and 5 in communication. As the male coupling half is inserted, a tapered leading edge 16 ahead of the shoulder 6 contacts the locking bodies 7 and displaces them radially outwardly into the release position shown in Figure 3. When the male coupling half 4 is fully inserted into the female coupling half 2, the vertical surface of the shoulder 6 is aligned with a side surface 19 of the channel 12 in the female half. The locking bodies 7 then move radially inwardly due to the force exerted by the O-ring 9, into the locking position shown in Figure 1. In this position, the locking bodies, which it will be remembered are ring segments, are positioned between the shoulders 6 and 21 to prevent relative separating movement of the coupling halves in the axial direction. The elastic O-ring 9 further serves to keep the locking bodies in the locking position to prevent the coupling halves from separating. The coupling halves may swivel with respect to one another while in the engaged and locked position.

The engaged and locked coupling halves may be used, for example, as part of a hydraulic or pneumatic transmission line or even as a quick release mechanical coupling. If the coupling is subjected to a separating force resulting from internal pressure or external tension, the locking bodies 7 act as stops to prevent separation of the coupling halves. The load exerted on the coupling due to high fluid pressure is transferred from the shoulder 6 of the male coupling half 4 through the locking bodies 7 to the female coupling half 2 via the shoulder 21 and enables the coupling to resist higher separating loads than other designs.

When it is desired to disengage the coupling halves, the releasing member 10 is moved towards the female coupling half 2. In this position, the ramped face 18 of the releasing member 10 is moved against the locking bodies 7. The ramped face 18 of the releasing member engages the similarly angled ring surface 62 on the locking bodies 7 and causes the locking bodies to be displaced outwardly to the release position. Once the locking bodies are in the release position and are no longer in engagement with the shoulder 6, the coupling halves 2, 4 may be removed from engagement without the use of tools.

The hydraulic, pneumatic or mechanical coupling can have the advantage that it is easy and quick to engage and disengage. Engagement may be effected by a "snap fit" by pushing the male coupling half into the female coupling half. No tools, excessive manipulation or unreasonable force is required. Once alignment is achieved and the coupling halves are pressed together, the locking bodies automatically move into the locking position.

When disengagement of the coupling halves is desired, it is necessary only to slide the releasing member 10 on the male coupling half as this will displace the locking bodies sufficiently to release the coupling halves. In addition, when the coupling halves are engaged, they are fully swivelling due to the radial symmetry and freely slidable locking bodies of the coupling.

The split collet ring segments which are the locking bodies 7 can provide a large area of contact between the male and female coupling halves. This increases the load carrying capacity of the coupling. The large contact surface offered by the generally square cross sectional profile of the locking bodies further enables the coupling to sustain relatively high separating loads and to be used in high pressure, pulsing and vibratory environments. This aspect also serves to reduce or eliminate the damage and wear to the coupling which would otherwise result from use in such environments.

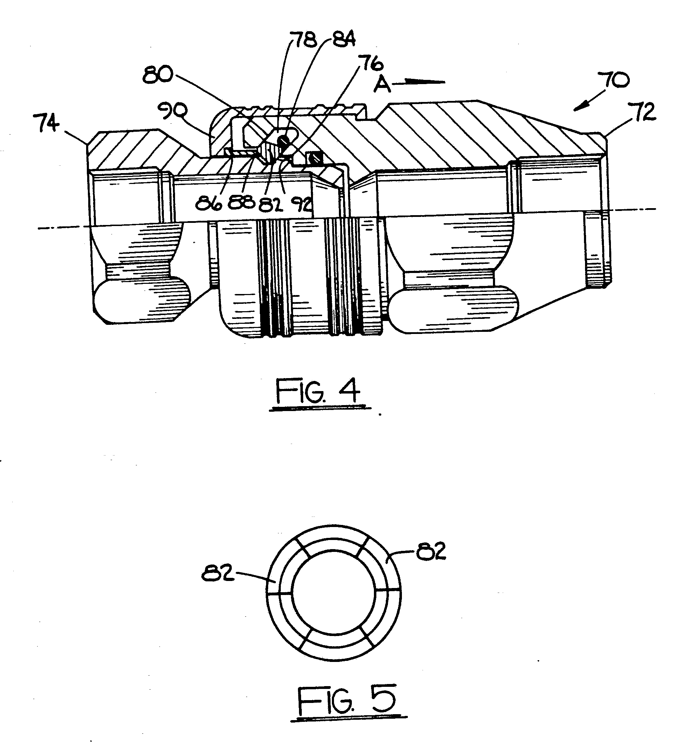

An alternative embodiment of coupling in the engaged and locked position and generally indicated 70 is shown in Figure 4. The coupling is similar in many aspects to the coupling 1 of the first embodiment and includes a female coupling half 72 and an interfitting male coupling half 74. An angled shoulder 76 extends outwardly at a first angle from the male coupling half relative to the centreline of the coupling and serves as a first locking surface.

The female coupling half 72 includes an angled channel 78 which also extends at the first angle, and has an inward extending shoulder 80 which serves as a second locking surface. A plurality of locking bodies 82 are mounted on the female coupling half 72. The locking bodies 82 form a substantially closed ring dimensioned to fit between the locking surfaces 76 and 80. The locking bodies 82, have the cross section of a five sided polygon. As shown in Figure 5, the locking bodies 82 are segments of split collet ring. When the coupling halves are in the engaged and locked position, the ring segments are in substantially abutting relation with each adjacent ring segment. As was discussed with reference to the first embodiment, this feature provides enhanced load carrying capability.

The locking bodies 82 are biased radially inward toward the male coupling half by an elastic O-ring 84. The elastic O-ring 84 extends about an outer periphery of the locking bodies.

A releasing ring member 86 is mounted on the female coupling half 72 and includes a tapered edge 88 which is normally in contact with a face of the locking bodies 82. The member 86 is mounted on a release sleeve 90. The sleeve 90 is mounted for movement longitudinally on the female coupling half 72 and is crimped or otherwise retained so it will not separate from the female coupling half.

When the coupling halves are to be disengaged from the engaged locked position shown in Figure 4, the sleeve 90 is moved in the direction of arrow A. This causes the releasing member 86 to move in a similar direction and the tapered edge 88 to apply force to the locking bodies 82. As a result of the applied force, the locking bodies move outwardly in the channel 78 against the force of the elastic O-ring 84. Further movement of the locking bodies causes such bodies to move above the locking surface 76 which enables the coupling halves to be separated.

When it is desired to lock the coupling halves together from a separated condition, the halves are moved into interfitting relation. A tapered leading edge 92 engages the locking bodies and moves them upwardly as the halves are pressed together. Once the locking bodies move past the surface 76, they fall inwardly in the channel 78 under the force of the O-ring 84, again placing the coupling halves in the engaged and locked position shown in Figure 4.

## Claims

1. A quick connect/disconnect coupling (1,10) for making a connection in a hydraulic and or pneumatic line and comprising a male coupling half (4,74) and a female coupling half (2,72) which are engageable and disengageable and are locked together when in engaged relation, wherein: the male coupling half (4,74) has a first fluid bore (5) therethrough and includes a first locking surface (6,76) extending outwardly relative to a centreline (5) of the coupling (1); the female coupling half (2,72) has a second fluid bore (3) therethrough, and has a second locking surface (21,80) extending inwardly relative to the centreline (50) of the coupling (1), the first and second bores (5,3) being in fluid communication when the coupling halves (4,2,74,72) are in engagement; a plurality of locking bodies (7,82) are mounted for movement transverse to the centreline of the coupling (1,70) in one of the coupling halves, in the engaged position of the halves the locking bodies (7,82) engage the first and second locking surfaces (6,21,76,80) and each of the locking bodies (7,82) is in abutting relation with at least one other of the locking bodies (7,82); and movement means (10,90) are provided for moving the locking bodies (7,82) to disengage them from at least one of the locking surfaces (6,21,76,80) whereby the coupling halves (2,4,72,74), are enabled to be disconnected.

2. A quick connect/disconnect coupling according to claim 1, wherein each of the locking bodies (7,82) is in abutting relation with at least two other adjacent locking bodies (7,82) when the coupling halves are in locked connection.

3. A quick connect/disconnect coupling according to claim 1 or claim 2, wherein the locking bodies (7,82) comprise a plurality of split ring segments.

4. A quick connect/disconnect coupling according to claim 3, including biasing means (9,84) for biasing the ring segments towards the centreline (50) of the coupling.

5. A quick connect/disconnect coupling according to claim 4, wherein the second locking surface is a shoulder (21) extending radially on the female coupling half and the locking bodies (7) are movable in a direction perpendicular to the centreline of the coupling (1).

6. A quick connect/disconnect coupling according to claim 5, wherein the locking bodies (7) are mounted on the female coupling half (2) and to the ring segments are generally rectangular in cross section.

7. A quick connect/disconnect coupling according to claim 6, wherein the first locking surface is an annular shoulder (6) extending perpendicular to the centreline (50) of the coupling (1) about a periphery of the male coupling half (4), and the movement means (10) is operable to move the locking bodies (7) radially outwardly beyond the annular shoulder (6) to enable disconnection of the coupling halves.

8. A quick connect/disconnect coupling according to claim 7, wherein the male coupling half (4) includes a tapered leading edge (16) adjacent the shoulder (6) whereby when the coupling halves are moved together from the disconnected position the tapered leading edge (16) engages the ring segments and the segments move thereon radially outwardly against the force of the biasing means (9), to enable the shoulder (6) to pass the ring segments, and after the shoulder (6) passes, the ring segments engage the shoulder (6) to lock the halves in locked engagement.

9. A quick connect/disconnect coupling according to claim 4, wherein the movement means comprises a releasing member (10) mounted on the male coupling half (4), the releasing member (10) including a locking body engaging surface (18) to engage the ring segments and move them against the force of biasing means (9) whereby the coupling halves may be disconnected.

10. A quick connect/disconnect coupling according to claim 9, wherein the releasing member (10) is movable generally in a direction parallel to the centreline (50) of the coupling (1) and the locking body engaging surface includes a ramped face (18) whereby movement of the releasing member towards the ring segments causes the releasing member to end the segments and move them radially outward.

11. A quick connect/disconnect coupling according to claim 10, wherein the ring segments include an outwardly tapered ring surface (62) adjacent the releasing member whereby the ramped face 18 of the releasing member (10) engages the tapered ring surface (62) of the ring segments.

12. A quick connect/disconnect coupling according to claim 10, wherein the biasing means is an elastic O-ring (10).

13. A quick connect/disconnect coupling according to claim 4, wherein the second locking surface is a shoulder (80) extending on the female coupling half (72) at a first angle relative to the centreline of the coupling (70) and the locking bodies (82) are movable in a direction perpendicular to the centreline of the coupling (70).

14. A quick connect/disconnect coupling according to claim 13, wherein the locking bodies (82) are mounted on the female coupling half (72) and the ring segments are generally five sided polygons in cross section.

15. A quick connect/disconnect coupling according to claim 14, wherein the first locking surface is a shoulder (76) extending at the first angle relative to the centreline of the coupling (70) about the periphery of the male coupling half (74), and the movement means (86) is operable to move the locking bodies (82) outward beyond the shoulder (76) to enable disconnection of the coupling halves (72,74).

EP 0 373 920 A1

FIG. 1

FIG. 2

FIG 3

EP 0 373 920 A1

FIG. 4

FIG. 5

European Patent Office

# EUROPEAN SEARCH REPORT

Application Number

EP 89 31 3048

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 398 977 (YONEDA) <br> * Fig. * | 1-7,9-15 | F 16 L 37/08 |
| X | US-A-1 509 651 (IFTIGER) <br> * Fig. * | 1,3-13, 15 | |
| | | | **TECHNICAL FIELDS SEARCHED (Int. Cl.5)** |
| | | | F 16 L |

The present search report has been drawn up for all claims

| Place of search | Date of completion of the search | Examiner |
|---|---|---|
| THE HAGUE | 08-03-1990 | HUBEAU M.G. |